# EUROPÄISCHE PATENTSCHRIFT

(11) **EP 4 334 614 B1**
(45) Veröffentlichungstag und Bekanntmachung des Hinweises auf die Patenterteilung: **18.03.2026**
(21) Anmeldenummer: 22727870.2
(22) Anmeldetag: 05.05.2022
(51) Int. Cl.: F16K 47/04, F16K 47/08, F16K 1/52, F16K 3/24

(54) **DROSSELELEMENT ZUR DRUCKREDUZIERUNG EINES PROZESSFLUIDES**
THROTTLE ELEMENT FOR REDUCING THE PRESSURE OF A PROCESS FLUID
ÉLÉMENT D'ÉTRANGLEMENT POUR RÉDUIRE LA PRESSION D'UN FLUIDE DE TRAITEMENT

(30) Priorität: 07.05.2021 DE 202021102471 U
(43) Veröffentlichungstag der Anmeldung: 13.03.2024
(73) Patentinhaber: Samson Aktiengesellschaft, 60314 Frankfurt (DE)
(72) Erfinder: KOENIG, Thomas, 60316 Frankfurt am Main (DE)
(74) Vertreter: patcare Patentanwälte Partnerschaft mbB
(86) Internationale Anmeldenummer: PCT/EP2022/062185
(87) Internationale Veröffentlichungsnummer: WO 2022/234034

(56) Entgegenhaltungen:
- EP-A1- 2 895 777
- DE-A1- 102006 005 535
- DE-A1- 102015 005 611
- NL-A- 7 314 151
- US-A1- 2007 240 774
- US-A1- 2016 123 477
- US-A1- 2019 021 186

## Beschreibung

Die Erfindung betrifft ein Drosselelement zur Druckreduzierung eines Prozessfluides, insbesondere zur Druckreduzierung in einer verfahrenstechnischen Anlage, gemäß dem Anspruch 1 sowie ein Stellventil gemäß der im Oberbegriff des Anspruches 8 angegebenen Art.

In verfahrenstechnischen Anlagen werden bekanntlich Prozessfluidströme in Prozessfluidleitungen über Stellventilen verfahrenstechnischen Prozessen zugeführt. Die Prozessfluidströme sind verfahrens- und betriebsgemäß nach bestimmten Regelgrößen einzustellen, unter anderem im Hinblick auf die Durchflussmenge. Es ist weiterhin hinlänglich bekannt in verfahrenstechnischen Anlagen sogenannte Drosselelemente zur Druckreduzierung vorzusehen.

Derartige Drosselelemente sind aus dem Stand der Technik hinreichend bekannt und umfassen in der Regel einen mehrere Durchflussöffnungen aufweisenden, von einem Prozessfluid zu durchströmenden Drosselkörper. Ein derartiges, gattungsgemäßes Drosselelement ist beispielsweise in der DE 10 2015 005 611 A1 offenbart.

Es ist weiterhin bekannt, dass durch eine entsprechende Ausgestaltung der Durchflussöffnungen im Drosselkörper eine gezielte Einflussnahme in Hinblick auf die Durchströmung, die Druckreduzierung und Kavitation ermöglicht ist. Neben einer Ausbildung der Durchflussöffnungen als Rund-, Quadrat- oder Langlöcher mit einem über der gesamten Länge geraden oder gewendelten Verlauf, vgl. DE 10 2015 005 611 A1, sind auch Durchflussöffnungen mit einer gekrümmten, schrägen, konischen und/oder mit Kanten und/oder Hinterschneidungen versehene Innenwandungen bekannt, siehe DE 10 2016 102 756 A1.

Die US 2007/0240774 A1 beschreibt einen Drosselkörper, bei dem die den Drosselkörper durchdringenden Durchflussöffnungen eine dreieckige oder auch sternförmige Kontur aufweisen können.

Die Anordnung eines Drosselelement in der verfahrenstechnischen Anlage kann auf vielfältige Art und Weise erfolgen: So kann z.B. ein Drosselelement als ein im Stellventil verbautes Bauteil ausgebildet sein, beispielsweise durch Ausbildung des Ventilglieds als Lochkegel, vgl. DE 24 31 322, oder durch Anordnung eines im Stellventil fest verbauten, mit dem Ventilglied zusammenwirkenden Ventilkäfig, siehe DE 10 2015 016 902 A1.

Alternativ kann ein Drosselelement aber auch unmittelbar in einer Prozessfluidleitung als eine sogenannte Rohrdrossel, beispielsweise im Ein- oder Auslassbereich eines Stellventils, einer Pumpe oder eines sonstigen Feldgerätes zur Druckreduzierung angeordnet sein.

Es ist in diesem Zusammenhang weiterhin bekannt, dass die beim Betrieb einer verfahrenstechnischen Anlage auftretende Geräuschemissionen, im Wesentlichen auf die beim Durchströmen der Drosselelemente auftretende Schallemissionen zurückzuführen sind.

Der Erfindung liegt die Aufgabe zugrunde ein Drosselelement gemäß der im Oberbegriff des Anspruches 1 angegebenen Art derart weiterzubilden, dass das Drosselelement beim Durchströmen eine geringere Geräuschentwicklung verursacht.

Diese Aufgabe wird durch die kennzeichnenden Merkmale des Anspruches 1 in Verbindung mit seinen Oberbegriffsmerkmalen gelöst.

Die Unteransprüche 2 bis 7 bilden vorteilhafte Weiterbildungen des erfindungsgemäßen Drosselelements.

Der Erfindung liegt die Erkenntnis zugrunde, dass die Kontur der Durchflussöffnungen einen großen Einfluss auf die Geräuschemissionen des Drosselelements haben.

Das Drosselelement sieht in bekannter Art und Weise vor,, dass die den Drosselkörper durchdringenden Durchflussöffnungen eine fraktale Kontur aufweisend ausgebildet sind.

Lediglich der Vollständigkeit halber wird in diesem Zusammenhang zunächst kurz auf den Begriff "Fraktal" eingegangen: Die fraktale Geometrie ist ein relativ neues Teilgebiet der Mathematik. Sie befasst sich mit geometrischen Objekten, den sog. Fraktalen, deren Eigenschaften sich von denen der "klassischen" Geometrie grundlegend unterscheiden. Wichtigstes Merkmal von Fraktalen ist die Selbstähnlichkeit, d.h., dass man bei jeder Vergrößerungsstufe Einzelheiten erkennen kann, egal wie stark man in das Objekt hinein dringt. Wenn man dagegen den Rand eines "klassischen" Objektes, wie den des Kreises, vergrößert, so ähnelt dieser mit zunehmender Vergrößerung immer mehr einer schlichten Gerade. Solche Objekte werden demnach als glatt bezeichnet. Bei einem Fraktal wird man jedoch nie eine Gerade erkennen können, sondern immer mehr Feinheiten des Objektes. Daher rührt die Bezeichnung "Fraktal", vom lateinischen "fractus" für "gebrochen", d.h. mit unzähligen Details übersät.

Somit ist die obige Formulierung "eine fraktale Kontur aufweisend ausgebildet" insbesondere so zu verstehen, dass die Kontur der Durchflussöffnung selbstähnlich ausgebildet ist, d.h. dass die Gesamtkontur der Durchflussöffnung aus kleineren selbstähnlichen, die gleiche Form aufweisende Konturen zusammengesetzt ist.

Da - wie Versuche gezeigt haben - fraktale Oberflächen bzw. Geometrien zur Geräuschreduzierung bei einem Druckabbau von Prozessfluiden besonders geeignet sind, hat die erfindungsgemäße Ausbildung den Effekt, dass beim Durchströmen des Drosselelement die Schallemissionen deutlich reduziert werden.

Erfindungsgemäß sind die fraktalen Konturen der Durchflussöffnungen in Form einer kochschen Schneeflockenkurve ausgebildet. Vorteilhaft an der Ausbildung der fraktalen Konturen als kochsche Schneeflockenkurven ist, dass diese einfach zu konstruieren und damit verhältnismäßig aufwandsarm in einem Bauteil technisch zu realisieren sind. Erfindungsgemäß ist zudem vorgesehen, dass es sich bei der kochschen Schneeflockenkurve um eine Kurve der 2. bis 7. Iteration handelt. Wie erste Versuche gezeigt haben, ist bei einer kochschen Kurve der 2. bis 7. Iteration bereits eine für eine deutliche Reduktion der Schallemission notwendige Selbstähnlichkeit der Kontur gewährleistet, sodass auf höhere Iterationen, d.h. auf eine noch feinere Auflösung bzw. noch höheren Grad der Selbstähnlichkeit der Kontur - die in der Herstellung um ein Vielfaches teurer wären - verzichtet werden kann.

Vorzugsweise sind die Durchflussöffnungen über zumindest eine Austrittsfläche des Drosselkörpers gleichmäßig verteilt angeordnet. Die gleichmäßige Verteilung der Durchflussöffnung erweist sich als vorteilhaft, da dies - wie Versuche gezeigt haben - ebenfalls zu einer Reduktion des Geräuschpegels und damit zu einer geringeren Geräuschentwicklung beiträgt.

Eine weitere vorteilhafte Ausführungsform der Erfindung zeichnet sich dadurch aus, dass der Drosselkörper einteilig ausgebildet ist. Die einteilige Ausgestaltung des Drosselkörpers erweist sich als vorteilhaft, da verschleißanfällige Bauteile wie z.B. Dichtungen zwischen zwei Bauteilkomponenten, nicht vorhanden sind, sodass ein verschleißfreier Betrieb des Drosselkörpers ermöglicht ist.

Bevorzugt wird dabei der Drosselkörper schichtweise, durch ein additives Herstellungsverfahren, insbesondere durch ein Lasersinterverfahren oder ein Laserschmelzverfahren, hergestellt, gemäß dem ein selektiver Materialauftragungsvorgang oder ein selektiver Materialaushärtungsvorgang anhand der vorgegebenen geometrischen Daten des Drosselkörpers gesteuert wird. Als vorteilhaft erweist sich hierbei, dass durch die Herstellung des Drosselkörper mittels eines additiven Herstellungsverfahrens neben einer schnellen Herstellung (es entfällt die zeitintensive Entwicklung/Herstellung von Werkzeugen/Formen), auch komplexe Geometrien bzw. Strukturen einfach und kostengünstig zu realisieren sind.

Eine alternative Ausführungsform der Erfindung sieht vor, dass der Drosselkörper durch ein Gussverfahren hergestellt ist.

Bevorzugt ist dabei der mittels eines additiven Herstellungsverfahrens oder mittels Gussverfahren hergestellte Drosselkörper aus Metall bzw. aus einer Metalllegierung hergestellt.

Der Erfindung liegt des Weiteren die Aufgabe zugrunde ein Stellgerät für eine verfahrenstechnische Anlage gemäß der im Oberbegriff des Patentanspruches 8 angegebenen Art derart weiterzubilden, dass ein in Bezug auf Schall- bzw. Geräuschemissionen optimierter Betrieb des Stellventils ermöglicht ist.

Diese Aufgabe wird durch die kennzeichnenden Merkmale des Patentanspruches 8 in Verbindung mit seinen Oberbegriffsmerkmalen gelöst.

In bekannter Art und Weise umfasst das Stellventil ein Ventilgehäuse mit einem Ventileinlass und einem Ventilauslass sowie ein zwischen dem Ventilein- und Ventilauslass angeordnetes Drosselelement. Erfindungsgemäß ist nunmehr vorgesehen, dass das Drosselelement nach einem der Ansprüche 1 bis 7 ausgebildet ist.

Sämtliche Ausführungen zum erfindungsgemäßen Drosselelement lassen sich analog auf das erfindungsgemäße Stellgerät übertragen, sodass mit diesem die zuvor genannten Vorteile erzielt werden.

Gemäß einer ersten Ausführungsform des erfindungsgemäßen Stellventils ist das Drosselelement als ein - in Bezug zu einem gehäusefesten Ventilsitz betrachtet - relativ bewegbarer Ventilkegel ausgebildet.

Eine alternative zweite Ausführungsform des erfindungsmäßen Stellventils zeichnet sich dadurch aus, dass das Drosselelement als ein in Ventilgehäuse fest verbauter Ventilkäfig ausgebildet ist, der seinerseits einen Ventilsitz aufweist und der mit einem im Ventilgehäuse bewegbar gelagerten Ventilglied zusammenwirkt.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Schnittansicht eines Stellventils mit einem als Ventilkäfig ausgebildeten Drosselkörper nach dem Stand der Technik;
- Fig. 2: eine schematische, vergrößerte Darstellung des Ventilkäfigs aus Fig. 1 mit erfindungsgemäß ausgebildeten Durchflussöffnungen, und
- Fig. 3: eine vergrößerte Darstellung einer Durchflussöffnung aus Fig. 2.

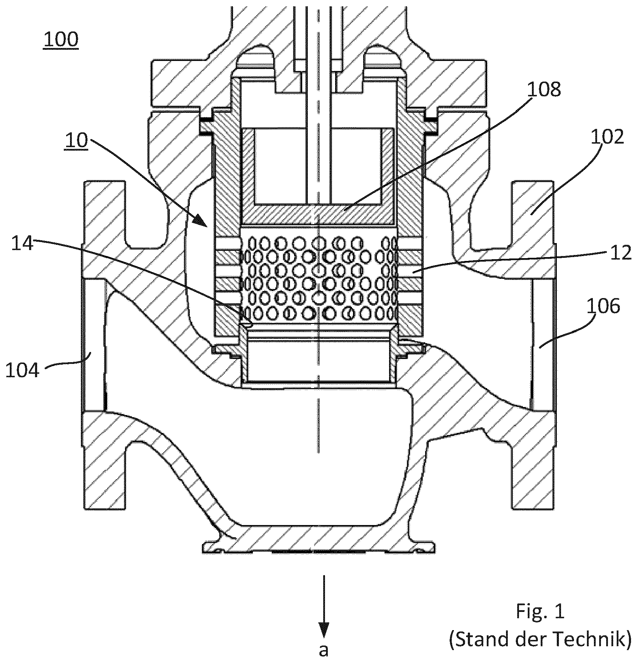

Fig. 1 zeigt ein insgesamt mehr Bezugsziffer 100 bezeichnetes Stellventil für eine verfahrenstechnische Anlage nach dem Stand der Technik.

Das Stellventil 100 umfasst ein Ventilgehäuse 102 mit einem Ventileinlass 104 und einem Ventilauslass 106, ein im Ventilgehäuse 102 des Stellventil 100 in axialer Richtung a verfahrbar gelagertes Ventilglied 108 sowie ein im Strömungskanal des Ventilgehäuses 102, also zwischen Ventileinlass 104 und Ventilauslass 106 angeordnetes, insgesamt mehr Bezugsziffer 10 bezeichnetes Drosselelement.

Das Drosselelement 10 ist vorliegend als ein sogenannter Ventilkäfig ausgebildet und fest im Ventilgehäuse 102 angeordnet. Wie Fig. 1 zeigt, ist das Drosselelement 10 vorliegend hülsenförmig ausgebildet und weist in seiner Mantelfläche eine Vielzahl von Durchgangsöffnungen 12 auf, über die ein zu steuerndes Prozessfluid vom Ventileinlass 104 zum Ventilauslass 106 strömen kann. Dabei sind, wie Fig. 1 weiter zu entnehmen ist, die Durchgangsöffnungen 12 als Rundlöcher ausgebildet.

Vorliegend ist das Ventilglied 108 im Innern des als Ventilkäfig ausgebildeten Drosselelement 10 geführt und entsprechend weist das hülsenförmig ausgebildete Drosselelement 10 einen inneren, komplementär zum Ventilglied 108 ausgebildete Ventilsitz 14 auf.

Somit ist über die axiale Position des Ventilglieds 108 in Bezug zum gehäusefesten Ventilkäfig der Durchfluss durch das Drosselelement 10 einstellbar.

Derartige, ein als Ventilkäfig ausgebildetes Drosselelement 10 aufweisende Stellventile sind auch unter dem Begriff "Käfigventil" hinlänglich bekannt.

Ein bekanntes Problem derartiger Käfigventile ist, dass diese zu hohen Geräuschemissionen neigen.

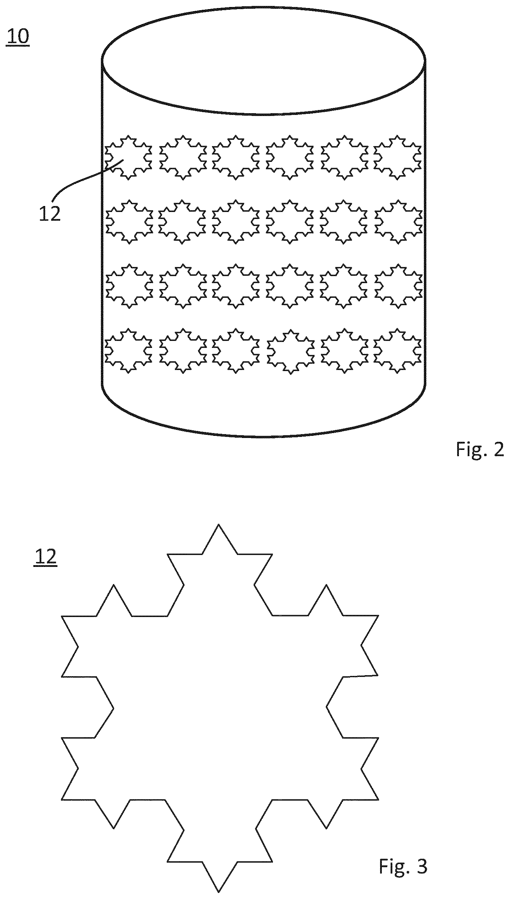

Hier setzt nun die Erfindung ein:
Wie Fig. 2 zu entnehmen ist, ist zur Reduzierung der Geräuschemissionen nunmehr erfindungsgemäß vorgesehen, dass die im als Ventilkäfig ausgebildete Drosselelement 10 eingebrachten Durchflussöffnungen 12 als fraktale Öffnungen, d.h. eine fraktale Kontur aufweisend, ausgebildet sind.

Wie Versuche gezeigt haben, werden durch die Ausbildung der Durchflussöffnungen als fraktale Öffnungen, also als eine fraktale Kontur aufweisende Öffnungen, die beim Ein- und Ausströmen des Prozessfluides in das Drosselelement 10 auftretenden Fließgeräusche und damit die Schallemissionen deutlich reduziert.

Vorliegend ist das als Ventilkäfig ausgebildete Drosselelement 10 einteilig ausgebildet und unter Verwendung eines additiven Fertigungsverfahren aus Metall bzw. einer Metalllegierung hergestellt.

Wie insbesondere aus Fig. 3 ersichtlich ist, sind die fraktale Öffnungen vorliegend in Form einer kochschen Schneeflockenkurve ausgebildet. Die Ausbildung der fraktalen Öffnungen in Form von kochschen Schneeflockenkurven erweist sich als besonders vorteilhaft, da diese einfach zu konstruieren und damit verhältnismäßig aufwandsarm, insbesondere mittels eines additiven Herstellungsverfahrens, technisch zu realisieren sind.

### Bezugszeichenliste

- 10: Drosselelement
- 12: Durchgangsöffnungen
- 14: Ventilsitz
- 100: Stellventil
- 102: Ventilgehäuse
- 104: Ventileinlass
- 106: Ventilauslass
- 108: Ventilglied

- a: axiale Richtung

## Patentansprüche

1. Drosselelement (10) zur Druckreduzierung eines Prozessfluides, umfassend einen vom Prozessfluid zu durchströmender, mehrere Durchflussöffnungen (12) aufweisender Drosselkörper, wobei die Durchflussöffnungen (12) eine fraktale Kontur aufweisend ausgebildet sind, wobei die fraktalen Konturen der Durchflussöffnungen (12) in Form einer kochschen Schneeflockenkurve ausgebildet sind, **dadurch gekennzeichnet, dass** es sich bei der Schneeflockenkurve um eine Kurve der 2 bis 7. Iteration handelt.

2. Drosselelement (10) nach einem der vorgenannten Ansprüche, **dadurch gekennzeichnet, dass** die Durchflussöffnungen (12) über zumindest eine Austrittsfläche des Drosselkörpers gleichmäßig verteilt angeordnet sind.

3. Drosselelement (10) nach einem der vorgenannten Ansprüche, **dadurch gekennzeichnet, dass** der Drosselkörper einteilig ausgebildet ist.

4. Drosselelement (10) nach einem der vorgenannten Ansprüche, **dadurch gekennzeichnet, dass** der Drosselkörper schichtweise durch ein additives Herstellungsverfahren hergestellt ist.

5. Drosselelement (10) nach Anspruch 4, **dadurch gekennzeichnet, dass** es sich bei dem additiven Herstellungsverfahren um ein Lasersinterverfahren oder ein Laserschmelzverfahren handelt.

6. Drosselelement (10) nach einem der Ansprüche 1 bis 3, **dadurch gekennzeichnet, dass** der Drosselkörper durch ein Gußverfahren hergestellt ist.

7. Drosselelement (10) nach einem der vorgenannten Ansprüche, **dadurch gekennzeichnet, dass** der Drosselkörper aus einem metallischen Werkstoff hergestellt ist.

8. Stellventil (100), umfassend ein Ventilgehäuse (102) mit einem Ventileinlass (104) und einem Ventilauslass (106) sowie ein zwischen Ventilein- und Ventilauslass (104, 106) angeordnetes Drosselelement (10), **dadurch gekennzeichnet, dass** das Drosselelement (10) nach einem der Ansprüche 1 bis 7 ausgebildet ist.

9. Stellventil (100) nach Anspruch 8, **dadurch gekennzeichnet, dass** das Drosselelement (10) als ein in Bezug zu einem gehäusefesten Ventilsitz betrachtet, relativ bewegbarer Ventilkegel ausgebildet ist.

10. Stellventil (100) nach Anspruch 8, **dadurch gekennzeichnet, dass** das Drosselelement (10) als ein gehäusefester, einen Ventilsitz (14) aufweisender, mit einem im Ventilgehäuse (102) verfahrbar gelagertem Ventilglied (108) zusammenwirkender Ventilkäfig ausgebildet ist.

## Claims

1. Throttle element (10) for reducing the pressure of a process fluid, comprising a throttle body through which the process fluid flows and which has a plurality of flow openings (12), which flow openings (12) are configured to have fractal contours, with the fractal contours of the flow openings (12) being shaped like a Koch snowflake curve, **characterized in that** the snowflake curve is a curve of the second to seventh iteration.

2. Throttle element (10) according to any one of the preceding claims, **characterized in that** the flow openings (12) are evenly distributed over at least one outlet area of the throttle body.

3. Throttle element (10) according to any one of the preceding claims, **characterized in that** the throttle body is of a one-part design.

4. Throttle element (10) according to any one of the preceding claims, **characterized in that** the throttle body is manufactured in layers using an additive manufacturing process.

5. Throttle element (10) according to claim 4, **characterized in that** the additive manufacturing process is a laser sintering process or a laser melting process.

6. Throttle element (10) according to any one of claims 1 to 3 above, **characterized in that** the throttle body is manufactured using a casting process.

7. Throttle element (10) according to any one of the preceding claims, **characterized in that** the throttle body is made of a metallic material.

8. Control valve (100), comprising a valve housing (102) with a valve inlet (104) and a valve outlet (106) as well as a throttle element (10) arranged between said valve inlet and said valve outlet (104, 106), **characterized in that** the throttle element (10) is of the type specified in any one of claims 1 to 7 above.

9. Control valve (100) according to claim 8, **characterized in that** the throttle element (10) is in the form of a valve cone which is adapted for relative movement with respect to a valve seat that is fixed to the housing.

10. Control valve (100) according to claim 8, **characterized in that** the throttle element (10) is configured as a valve cage which is fixed to the housing, which valve cage has a valve seat (14) and interacts with a valve member (108) that is mounted so as to be movable in the valve housing (102).

## Revendications

1. Elément d'étranglement (10) pour réduire la pression d'un fluide de traitement, comprenant un corps d'étranglement destiné à être traversé par le fluide de traitement, présentant plusieurs ouvertures de passage (12), dans lequel les ouvertures de passage (12) sont réalisées de manière à présenter un contour fractal, dans lequel les contours fractaux des ouvertures de passage (12) sont réalisés sous la forme d'une courbe du flocon de neige de von Koch,
**caractérisé en ce que**
la courbe du flocon de neige est une courbe de 2^{ème} à 7^{ème} itération.

2. Elément d'étranglement (10) selon l'une quelconque des revendications précédentes, **caractérisé en ce que** les ouvertures de passage (12) sont réparties de manière uniforme sur au moins une surface de sortie du corps d'étranglement.

3. Elément d'étranglement (10) selon l'une quelconque des revendications précédentes, **caractérisé en ce que** le corps d'étranglement est réalisé d'une seule pièce.

4. Elément d'étranglement (10) selon l'une quelconque des revendications précédentes, **caractérisé en ce que** le corps d'étranglement est fabriqué couche par couche par un procédé de fabrication additive.

5. Elément d'étranglement (10) selon la revendication 4, **caractérisé en ce que** le procédé de fabrication additive est un procédé de frittage laser ou un procédé de fusion laser.

6. Elément d'étranglement (10) selon l'une quelconque des revendications 1 à 3, **caractérisé en ce que** le corps d'étranglement est fabriqué par un procédé de coulée.

7. Elément d'étranglement (10) selon l'une quelconque des revendications précédentes, **caractérisé en ce que** le corps d'étranglement est fabriqué à partir d'un matériau métallique.

8. Soupape de commande (100), comprenant un carter de soupape (102) avec une entrée de soupape (104) et une sortie de soupape (106) ainsi qu'un élément d'étranglement (10) disposé entre l'entrée de soupape et la sortie de soupape (104, 106), **caractérisé en ce que** l'élément d'étranglement (10) est réalisé selon l'une quelconque des revendications 1 à 7.

9. Soupape de commande (100) selon la revendication 8, **caractérisée en ce que** l'élément d'étranglement (10) est réalisé sous la forme d'un cône de soupape relativement mobile vu par rapport à un siège de soupape fixé au carter.

10. Soupape de commande (100) selon la revendication 8, **caractérisé en ce que** l'élément d'étranglement (10) est réalisé sous la forme d'une cage de soupape fixée au carter, présentant un siège de soupape (14), coopérant avec un organe de soupape (108) monté déplaçable dans le carter de soupape (102).
